# FASCICULE DE BREVET EUROPEEN

(11) **EP 2 315 307 B1**
(45) Date de publication et mention de la délivrance du brevet: **04.07.2018**
(21) Numéro de dépôt: 09290810.2
(22) Date de dépôt: 22.10.2009
(51) Int. Cl.: H01Q 1/24, H01Q 1/44, H04B 1/38, H04B 1/3827

(54) **Dispositif de protection biologique contre les ondes électromagnétiques émises par un téléphone mobile**
Biologische Schutzvorrichtung gegen die von Mobiltelefonen ausgesandten elektromagnetischen Wellen
Device for biological protection against electromagnetic waves emitted by a mobile telephone

(43) Date de publication de la demande: 27.04.2011
(73) Titulaire: Ancilia Protect Ltd, London W2 1HR (GB); Université de Nantes, 44035 Nantes Cedex 1 (FR)
(72) Inventeur: Parienti, Serge, 92100 Boulogne-Billancourt (FR); Mourali, Cyril, 75001 Paris (FR); Saillard, Joseph, 44800 Saint Herblain (FR); Chauveau, Janic, 44130 Blain (FR); Brunet, Marc, 44450 Saint Julien de Concelles (FR)
(74) Mandataire: Louiset, Raphaël

(56) Documents cités:
- DE-A1- 10 111 063
- DE-U1-202008 016 968
- US-A1- 2002 137 475
- US-A1- 2009 111 543

## Description

La présente invention concerne le domaine des dispositifs de protection biologique individuelle contre les émissions de pollution électromagnétique.

La présente invention concerne plus particulièrement un dispositif de protection biologique contre les ondes électromagnétiques émises par un téléphone mobile. Le document US2002/137475 divulgue un boîtier de protection biologique pour protéger un utilisateur des ondes électromagnétiques d'un téléphone mobile. Dans un monde sans fil, où les individus sont en connexion constante, les technologies mobiles de toutes sortes se multiplient, et par conséquent, la génération d'ondes électromagnétiques. Ainsi, la plupart des habitants des pays développés possèdent un équipement complet d'appareils rayonnants : téléphones mobiles et sans fil (plus de 2 milliards d'abonnés actuellement, 3 milliards prévus en 2010), ordinateurs (1 milliard d'ordinateurs vendus), modems WIFI (1 milliard d'abonnés à internet, à terme tous en WIFI), consoles de jeux, oreillettes Bluetooth, ...

La densification des sources électromagnétiques dans notre environnement pose la question concrète des effets sur la santé et le cas du téléphone mobile est le plus significatif. En effet, ce segment du marché des télécommunications connaît une croissance fulgurante et le téléphone mobile soulève depuis sa diffusion sur le marché les doutes les plus virulents concernant l'exposition des individus à ses rayonnements électromagnétiques puissants, continus et proches du cerveau.

La question de la nocivité n'a à ce jour pas trouvé de réponse concrète et définitive et la polémique est à son paroxysme. De nombreuses études internationales, réalisées sur le sujet, oscillent dans leurs conclusions entre « catastrophe sanitaire » et « faibles dangers », sans jamais établir le risque zéro.

En France, suite à la parution du décret du 8 octobre 2003, les téléphones mobiles doivent présenter un indice de débit d'absorption spécifique (DAS) inférieur à 2 W/kg sur 10 g de tissu humain au niveau du tronc et de la tête, le DAS étant une grandeur fondamentale associée à réchauffement des tissus. Aux Etats Unis, la commission fédérale des communications requiert que les téléphones mobiles vendus aient un DAS égal ou inférieur à 1,6 W/kg sur un volume d'un gramme de tissu humain. Les derniers téléphones mobiles parus sur le marché émettent un rayonnement électromagnétique encore responsable d'un débit d'absorption spécifique de l'ordre de 1 W/kg. Quoi qu'il en soit le manque de recul et les incertitudes nous rappellent au principe de précaution, principe constitutionnel, au nom duquel il apparaît nécessaire de développer des dispositifs de protection biologique individuelle permettant de limiter l'exposition de l'organisme aux pollutions électromagnétiques.

L'art antérieur enseigne déjà des systèmes d'antennes passives de protection biologique contre un large spectre de fréquences des ondes électromagnétiques se présentant sous la forme d'une gamme de patchs qu'il suffit d'appliquer sur l'équipement de technologie mobile et entre ledit équipement et l'utilisateur, pour protéger l'utilisateur des ondes électromagnétiques émises par l'équipement. Ces systèmes utilisent le principe physique du déphasage à 180° des ondes électromagnétiques.

Toutefois, du fait de la petite taille du patch par rapport à la taille de l'équipement mobile, les performances en sont forcément limitées. De plus, ces techniques s'adaptent pas ou mal aux protocoles standards de mesure de DAS.

La présente invention a pour but de pallier un ou plusieurs inconvénients de l'art antérieur en proposant un dispositif de protection biologique contre les ondes électromagnétiques émises par un téléphone mobile.

Ce but est atteint par un dispositif de protection biologique contre les ondes électromagnétiques émises par un téléphone mobile, caractérisé en ce qu'il comporte au moins un cadre et un écran, l'écran étant de dimensions en longueur et en largeur suffisantes pour couvrir au moins le périmètre interne du cadre, l'écran et le cadre étant liés, par un de leurs coins, par une liaison pivot dont l'axe est perpendiculaire à l'écran et au cadre, pour permettre le pivotement de l'écran par rapport au cadre, au moins dans un sens et entre deux positions, une position de recouvrement du cadre par l'écran et une position de non-recouvrement du cadre par l'écran,
l'écran et le cadre étant chacun réalisé au moins en partie en matériau métallique bon conducteur, ces parties étant agencées soit pour assurer une continuité électrique entre elles, soit pour que l'espace entre elles soit inférieure à 5 mm, au moins lorsque l'écran recouvre le cadre,
le téléphone mobile étant maintenu dans la profondeur de l'élément de protection de telle sorte que l'écran soit situé en vis-à-vis de l'interface ergonomique du téléphone mobile et en maintenant, de toute part, un espace électriquement isolant répondant à des critères de dimensionnement relatif entre la partie métallique de l'élément de protection et le téléphone mobile.

Selon une particularité, l'espace électriquement isolant entre la partie métallique de l'élément de protection et l'interface ergonomique du téléphone mobile est d'une épaisseur d'au moins 2 mm, de préférence comprise entre 3 mm et 8 mm.

Selon une autre particularité, la partie en matériau métallique bon conducteur de l'écran consiste en une métallisation continue ou discontinue de la surface externe de l'écran, la partie en matériau métallique bon conducteur du cadre consiste en une métallisation continue ou discontinue de la surface externe du cadre.

Selon une autre particularité, les critères de dimensionnement relatif correspondent à une longueur de l'élément de protection égale ou supérieure à 1,15 fois la longueur du téléphone mobile, une largeur de l'élément de protection égale ou supérieure à 1,2 fois la largeur du téléphone mobile, et une profondeur de l'élément de protection égale ou supérieure à 1,3 fois l'épaisseur du téléphone mobile.

Selon une autre particularité, les critères de dimensionnement relatif correspondent en outre à une longueur de l'élément de protection de préférence inférieure ou égale à 1,3 fois la longueur du téléphone mobile, une largeur de l'élément de protection de préférence inférieure ou égale à 1,3 fois la largeur du téléphone mobile et une profondeur de l'élément de protection de préférence inférieure ou égale à 1,6 fois l'épaisseur du téléphone mobile.

Selon une autre particularité, la surface externe de l'écran est légèrement bombée de façon à obtenir une concavité de l'élément de protection.

Selon une autre particularité, l'écran et/ou le cadre comportent un ou plusieurs orifices de taille inférieure aux longueurs d'onde des ondes électromagnétiques utilisées en téléphonie mobile, I(es)' orifice(s) étant situé(s) soit en vis-à-vis du microphone et/ou du haut-parleur et/ou tout autre dispositif compris dans le téléphone mobile et chargé de recevoir et/ou émettre des ondes acoustiques, de façon à ce que ces ondes acoustiques ne soient pas altérées par l'élément de protection, soit situés en face des connectiques du téléphone mobile.

Selon une autre particularité, le maintien du téléphone mobile dans la profondeur de l'élément de protection est assuré par un organe de fixation en matériau isolant non conducteur destiné à être fixé sur au moins une partie du pourtour du cadre tout en appuyant sur le dos du téléphone et le maintien de l'espace d'au moins 2 mm entre la partie métallique de l'élément de protection et l'interface ergonomique du téléphone mobile est assuré par un matériau isolant non conducteur collé sur au moins une partie du pourtour interne du cadre, le téléphone mobile étant ainsi maintenu enserré entre l'organe de fixation et le matériau isolant.

Selon une autre particularité, l'organe de fixation consiste en deux barres de fermeture montées sur le cadre de protection en vis-à-vis de l'écran de protection, au moins l'une des deux barres étant articulée au pourtour du cadre entre au moins une position d'ouverture et une position de fermeture.

Selon une autre particularité, un logement destiné à accueillir un aimant est pratiqué dans le pourtour de la surface interne de l'écran, cet aimant étant agencé pour attirer un aimant logé dans un logement pratiqué dans le pourtour extérieur du cadre en vis-à-vis du logement pratiqué dans le pourtour de la surface interne de l'écran, lorsque l'écran est en position de recouvrement du cadre, pour maintenir l'écran en position de recouvrement du cadre.

Selon une autre particularité, la liaison pivot est agencée dans une saillie formant le coin de l'écran par lequel l'écran est lié au cadre et dans une saillie formant le coin du cadre par lequel le cadre est lié à l'écran, les saillies de l'écran et du cadre coopérant entre elles, l'axe de la liaison pivot étant fixé sur la surface interne de l'écran et au centre de la saillie de l'écran pour se loger dans un alésage traversant pratiqué au centre de la saillie du cadre.

Selon une autre particularité, l'axe de la liaison pivot est d'une longueur déterminée pour traverser, et dépasser par une extrémité, l'alésage traversant pratiqué dans la saillie du cadre, l'extrémité de l'axe dépassant étant mise en prise avec un arrêt d'axe pour empêcher l'axe de quitter l'alésage traversant, la surface interne de l'écran frottant en pivotant contre une partie de la surface externe du cadre.

Selon une autre particularité, la saillie de l'écran comporte un ergot fixé à côté de l'axe de la liaison pivot et de façon excentrée par rapport à celui-ci, l'ergot coopérant avec un retrait de matière pratiqué dans la saillie du cadre sur le trajet de rotation de l'ergot entraîné par le pivotement de l'écran, la coopération de l'ergot avec le retrait de matière limitant le pivotement de l'écran par rapport au cadre au moins entre la position de recouvrement du cadre par l'écran et la position de non-recouvrement du cadre par l'écran.

Selon une autre particularité, la saillie de l'écran comporte un logement fixé à côté de l'axe de la liaison pivot et de façon excentrée par rapport à celui-ci, le logement étant destiné à accueillir un aimant, et la saillie du cadre comporte au moins un alésage destiné à accueillir un aimant, le logement et chaque alésage étant agencés pour que l'aimant logé dans l'écran passe en vis-à-vis de l'aimant logé dans chaque alésage du cadre sur le trajet de pivotement de l'écran par rapport au cadre.

Selon une autre particularité, l'aimant logé dans la saillie de l'écran est agencé pour attirer un premier aimant logé dans un premier alésage de la saillie du cadre et maintenir l'écran en positon de recouvrement du cadre, et pour attirer un second aimant logé dans un second alésage de la saillie du cadre et maintenir l'écran en position de non-recouvrement du cadre.

Selon une autre particularité, un troisième aimant logé dans un troisième alésage de la saillie du cadre situé entre le premier et le second alésage est agencé pour repousser l'aimant logé dans la saillie de l'écran, l'écran se trouvant dans une position intermédiaire entre la position de recouvrement et la position de non-recouvrement étant ainsi repoussé vers l'une ou l'autre de ces positions.

D'autres particularités et avantages de la présente invention apparaîtront plus clairement à la lecture de la description ci-après, faite en référence aux dessins annexés, dans lesquels :
- la figure 1 représente schématiquement le banc de test situé dans une chambre anéchoïque et réalisé pour les mesures,
- la figure 2 représente un tableau de mesures présentant les résultats obtenus en utilisant le téléphone sans élément de protection,
- la figure 3 représente un tableau de mesures présentant les résultats obtenus en utilisant le téléphone avec élément de protection,

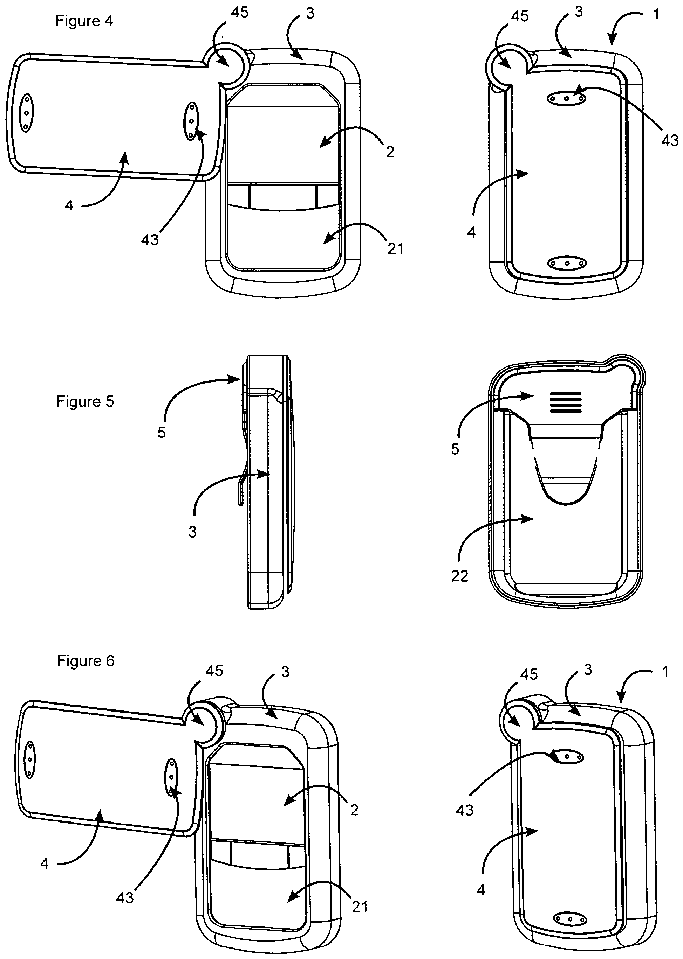

- la figure 4 représente une vue de face du téléphone mobile maintenu dans le cadre avec l'écran en position de non-recouvrement et l'écran en position de recouvrement,
- la figure 5 représente une vue de profil et une vue de dos du téléphone mobile dans l'élément de protection selon l'invention,
- la figure 6 représente une vue de ¾ du téléphone mobile maintenu dans le cadre avec l'écran en position de non-recouvrement et l'écran en position de recouvrement,

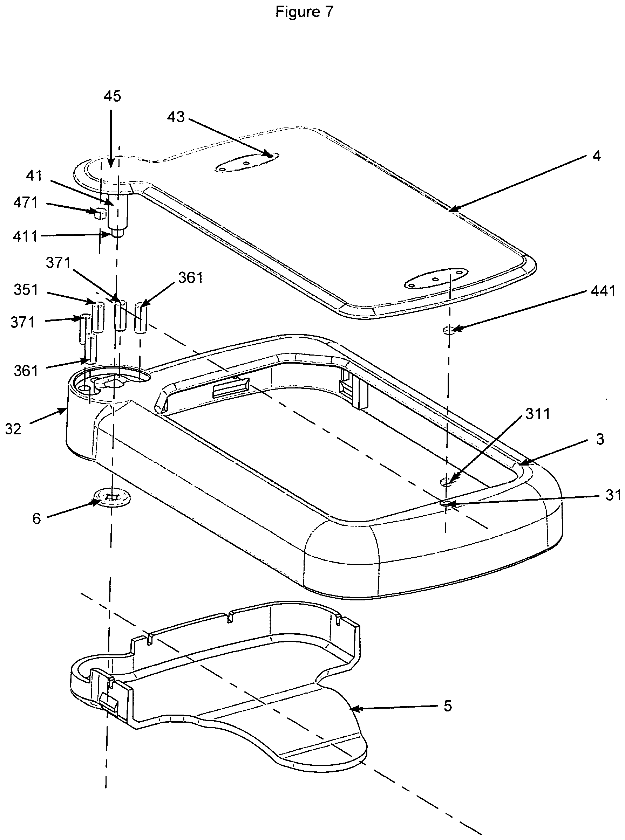

- la figure 7 représente une vue en perspective des éléments éclatés constituant le dispositif de protection selon l'invention,

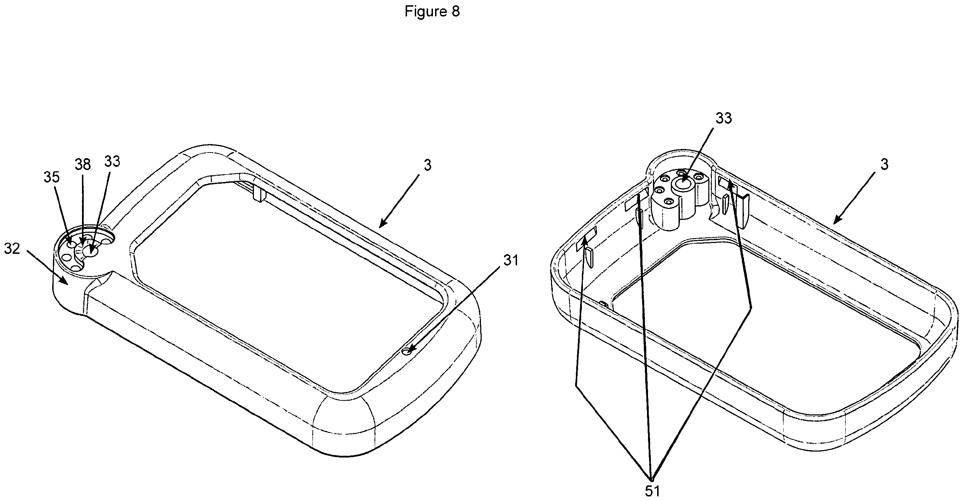

- la figure 8 représente une vue en perspective de l'extérieur et de l'intérieur du cadre formant une partie de l'élément de protection selon l'invention,

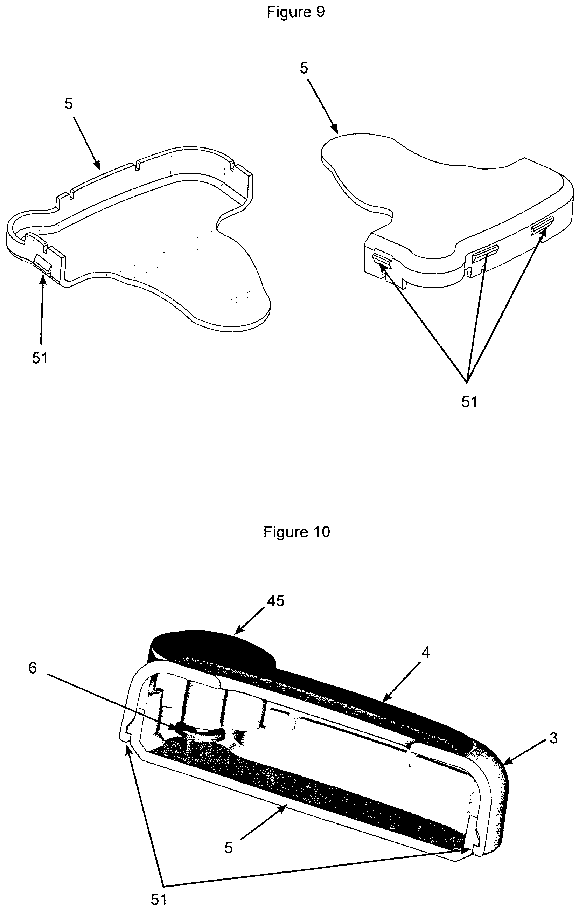

- la figure 9 représente une vue en perspective de l'intérieur et de l'extérieur de l'organe de maintien selon l'invention,
- la figure 10 représente une vue en coupe latérale haute du dispositif selon l'invention,

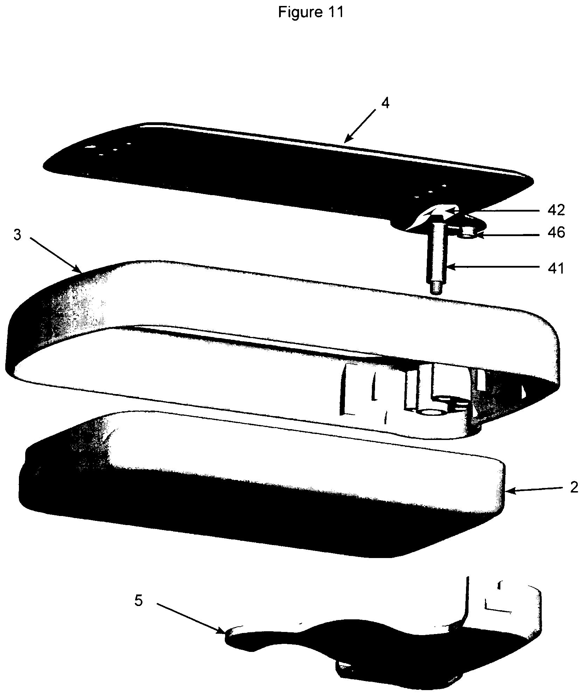

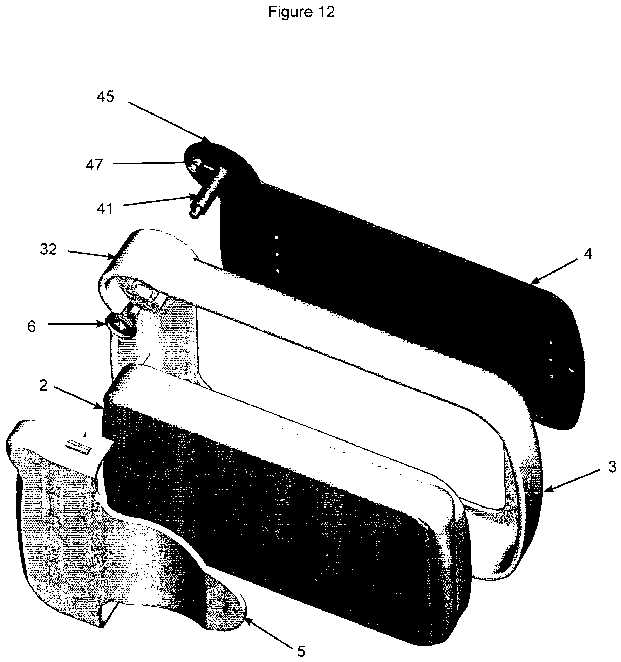

- les figures 11 et 12 représentent une vue en perspective des éléments éclatés constituant le dispositif de protection selon l'invention, respectivement de côté et de dos,

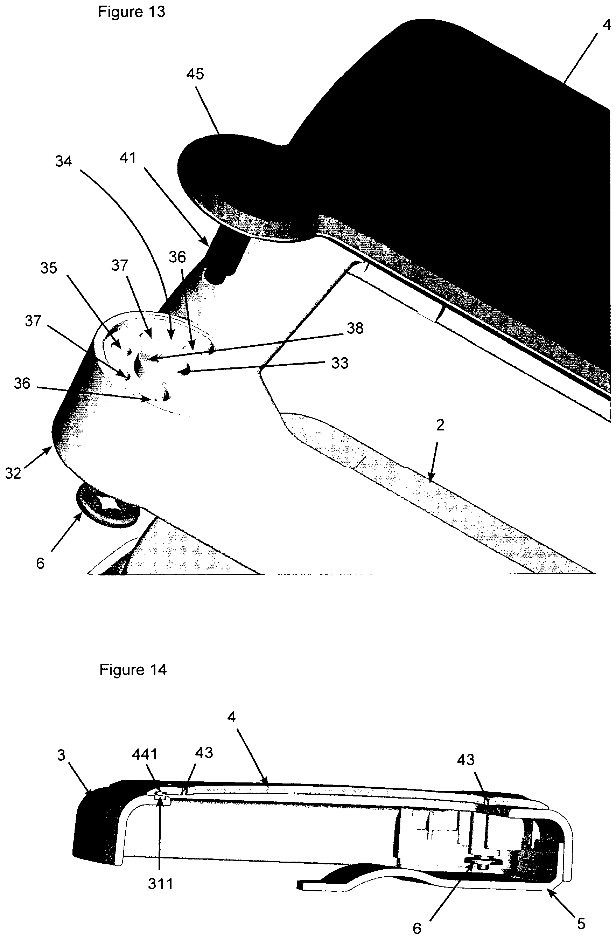

- la figure 13 représente un agrandissement sur le mécanisme d'indexation et de limitation du pivotement de l'écran par rapport au cadre selon l'invention,
- la figure 14 représente une vue en coupe longitudinale du dispositif selon l'invention,
- les figures 15 à 23 représentent un mode de réalisation de l'invention dans lequel l'organe de fixation du téléphone mobile dans la profondeur de l'élément de protection présente deux barres de fermeture situées en vis-à-vis de l'écran de protection par rapport au cadre de protection, les figures 15 à 17 illustrant plus particulièrement la façon dont le téléphone mobile est inséré dans, ou retiré depuis, l'élément de protection.

La présente invention propose un dispositif constituant, au moins dans une position dédiée, un élément de protection (1) de l'utilisateur contre les ondes électromagnétiques émises par un téléphone mobile (2). Un téléphone mobile est un appareil qui nous est à tous bien connu dans ses formes, ses fonctionnalités et ses usages. Ses émissions continues et puissantes d'ondes électromagnétiques atteignent leur pleine puissance durant une communication téléphonique. C'est donc pendant cette phase d'utilisation particulière que le téléphone est le plus potentiellement nocif, or c'est également pendant cette phase d'utilisation que le téléphone se situe à proximité voire contre la tête de l'utilisateur dans la zone s'étendant de la bouche à une des oreilles. Par conséquent, c'est pendant cette phase de communication qu'il est d'autant plus important de protéger l'utilisateur.

Ce constat simple, lié au mode d'utilisation d'un téléphone mobile, nous permet d'illustrer pourquoi il est nécessaire que l'élément de protection (1) soit agencé de façon à être situé durant une communication sans fil entre le téléphone mobile (2) et son utilisateur.

L'élément de protection (1) doit constituer pour l'utilisateur un blindage contre les ondes électromagnétiques émises par son téléphone mobile (2). Cette caractéristique d'étanchéité aux ondes électromagnétiques ne peut être remplie que par un matériau bon conducteur, tel que le cuivre. C'est pourquoi l'élément de protection (1) doit être réalisé au moins en partie en un tel matériau.

Si de plus, le téléphone mobile (2) est maintenu dans la profondeur de l'élément de protection, alors les ondes électromagnétiques émises par le téléphone mobile (2) sont non seulement réfléchies par l'élément de protection (1) vers le téléphone mobile, mais aussi préférentiellement selon une direction opposée à l'utilisateur. L'élément de protection (1) ayant une profondeur significative par rapport à l'épaisseur du téléphone mobile est plus efficace que s'il formait une simple surface plane finie.

Toutefois, il est à noter que l'objectif de protection du dispositif selon la présente invention ne peut être atteint qu'à certaines conditions dont au moins deux sont primordiales.
Premièrement, l'élément de protection (1) doit être suffisamment profond pour éviter le retour des ondes électromagnétiques vers l'utilisateur par des effets de bords le long du pourtour de l'élément de protection (1). Deuxièmement, l'élément de protection (1) est constitué au moins en partie en matériau métallique bon conducteur, comme le sont les antennes émettrices/réceptrices d'ondes électromagnétiques, or il faut s'assurer que l'élément de protection (1) ne fonctionne pas pour l'utilisateur comme une antenne mais bel et bien comme une protection. Pour cela, il ne faut pas que l'élément de protection (1) capte et amplifie les rayonnements électromagnétiques émis par le téléphone mobile (2). C'est pourquoi, il est nécessaire d'isoler électriquement le téléphone mobile (2) et la partie métallique de l'élément de protection (1). Cette isolation électrique est réalisée en maintenant un espace électriquement isolant d'au moins 2 mm, de toute part, entre le téléphone mobile (2) et la partie métallique de l'élément de protection (1). Il est à noter que, pour un espace entre l'interface ergonomique du téléphone mobile et la partie métallique de l'élément de protection de 0.5 mm par exemple, l'élément de protection conduit, voire amplifie, les ondes électromagnétiques émises et/ou reçues par le téléphone mobile. On peut également préciser une borne supérieure des valeurs possibles pour l'espace électriquement isolant entre l'interface ergonomique du téléphone mobile (2) et la partie métallique de l'élément de protection (1). Cette borne supérieure est fixée à 10 mm, ce choix étant uniquement dicté par le souhait de conserver un ensemble, formé du téléphone mobile et de son élément de protection, qui soit mobile et d'une taille et d'un esthétisme convenables. Préférentiellement, l'espace électriquement isolant entre l'interface ergonomique du téléphone mobile (2) et la partie métallique de l'élément de protection (1) est de toute part d'une valeur comprise entre 3 mm et 8 mm.
En conséquence, les dimensions en longueur et en largeur de l'élément de protection (1) doivent être supérieures aux dimensions en longueur et en largeur du téléphone mobile (2). En conséquence également, la dimension en profondeur de l'élément de protection (1) doit être supérieure à l'épaisseur de l'espace électriquement isolant entre l'interface ergonomique du téléphone mobile et la partie métallique de l'élément de protection située en vis-à-vis de ladite interface ergonomique.

Dans le cas d'une métallisation, pouvant être continue ou discontinue, sur un substrat électriquement isolant d'une épaisseur déterminée, l'espace électriquement isolant entre l'interface ergonomique du téléphone mobile et la partie métallique de l'élément de protection correspond à l'espace entre l'interface ergonomique du téléphone mobile et le substrat, plus l'épaisseur déterminée du substrat.

Le choix d'un élément de protection plus ou moins profond et le choix d'une valeur particulière, comprise entre 2 mm et 10 mm, préférentiellement entre 3 mm et 8 mm pour l'espace électriquement isolant entre le téléphone mobile (2) et l'élément de protection (1), sont préférentiellement dépendants l'un de l'autre. En effet, de nombreux tests scientifiques de performance de protection ont été effectués sur l'élément de protection selon l'invention, desquels il ressort que les deux conditions primordiales ci-dessus énoncées sont liées entre elles relativement aux capacités fonctionnelles de base d'émission/réception du téléphone mobile. En particulier, deux observations importantes à ce sujet ressortent de ces tests.
Premièrement, pour un téléphone mobile (2) et un élément de protection (1) de forme et de dimensions fixées, il peut résulter d'un espace faible entre eux, par exemple inférieur à 2 mm, un disfonctionnement et/ou une perte de performance significative du téléphone mobile quant à ces capacités fonctionnelles de base d'émission/réception, cet inconvénient étant largement estompé dès lors que l'espace électriquement isolant atteint une valeur d'au moins 3 mm.
Deuxièmement, pour un même espace électriquement isolant entre l'interface ergonomique du téléphone mobile et la partie métallique de l'élément de protection, plus l'élément de protection est profond relativement à l'épaisseur du téléphone mobile, plus le disfonctionnement et la perte de performance du téléphone mobile sont significatifs. Du fait que le téléphone délivre des signaux d'une plus grande puissance afin de conserver la qualité des transmissions, une surchauffe et/ou un déchargement prématuré de sa batterie, ou plus généralement une réduction de son autonomie, peuvent alors être observés.
La qualité de la protection contre les ondes électromagnétiques émises par le téléphone mobile est, quant à elle, faiblement affectée par la variation de ces paramètres et reste satisfaisante dans les limites définies dans la présente demande, comme le prouvent les résultats de performance présentés à la fin de cette description.

Le choix d'un élément de protection plus ou moins profond et le choix d'une valeur particulière comprise entre 2 mm et 10 mm, préférentiellement entre 3 mm et 8 mm, de l'espace électriquement isolant entre l'interface ergonomique du téléphone mobile et la partie métallique de l'élément de protection doit donc correspondre à la recherche d'un compromis entre la qualité de la protection apportée et la qualité des communications téléphoniques. De plus, le souhait de conserver un ensemble, téléphone mobile et élément de protection, mobile et esthétique impose un encombrement minimum. C'est à cette fin qu'il est précisé un espace électriquement isolant de 10 mm maximum, préférentiellement de 8 mm maximum.

A titre d'exemple non limitatif, le dispositif de protection biologique contre les ondes électromagnétiques émises par un téléphone mobile (2) comporte au moins un cadre (3) et un écran (4) de dimensions en longueur et en largeur suffisantes pour couvrir au moins le périmètre interne du cadre. L'écran (4) et le cadre (3) sont liés, par un de leurs coins, par une liaison pivot dont l'axe (41) est perpendiculaire à l'écran et au cadre. La liaison pivot doit permettre le pivotement de l'écran (4) par rapport au cadre (3), au moins dans un sens et entre deux positions. Ces deux positions consistent en une position de recouvrement du cadre par l'écran et une position de non-recouvrement du cadre par l'écran. Par exemple, deux sens de pivotement et trois positions de l'écran par rapport au cadre sont envisageables : une première position de recouvrement du cadre par l'écran, une seconde position de non-recouvrement du cadre par l'écran par un pivotement de l'écran à gauche du cadre et une troisième position de non-recouvrement du cadre par l'écran par un pivotement de l'écran à droite du cadre.

De façon générale, l'idée est de permettre à l'utilisateur de se protéger des ondes électromagnétiques émises par son téléphone mobile (2) quand il le souhaite, sans perdre l'usage de l'interface ergonomique (21) de son téléphone mobile (2). Ainsi, il est préféré que la position de non-recouvrement du cadre (3) par l'écran (4) libère entièrement l'accès à l'interface ergonomique (21).

L'écran (4) et le cadre (3) sont chacun réalisés au moins en partie en matériau métallique bon conducteur. Ces parties sont agencées pour assurer une continuité électrique entre elles et/ou pour que l'espace entre la partie métallique du cadre et la partie métallique de l'écran soit inférieur à 5 mm, au moins lorsque l'écran (4) recouvre le cadre (3).

Cette condition de continuité électrique et/ou d'espacement inférieur à 5 mm entre la partie métallique du cadre et la partie métallique de l'écran est nécessaire afin que les parties en matériau métallique bon conducteur de l'écran (4) et du cadre (3) forment un élément de protection (1) ouvert et étanche aux ondes électromagnétiques, lorsque l'écran (4) recouvre le cadre (3). L'élément de protection apparaît en effet comme un parallélépipède rectangle ouvert sur une de ses bases pour former un réceptacle. De plus, les coins et les arrêtes dudit parallélépipède rectangle sont préférentiellement non saillants, mais arrondis ou biseautés. Cette caractéristique est introduite afin de fournir un dispositif de protection qui soit esthétique, mais également afin d'éviter des phénomènes de réflexion multiples des ondes électromagnétiques dans la profondeur de l'élément de protection et ainsi augmenter la qualité de la protection apportée.
Ainsi, l'homme de métier comprendra qu'il importe peu par exemple que les parties non métallisées du dispositif de protection aient des angles arrondis ou biseautés, mais qu'il importe que les parties métallisées en aient. Par exemple, dans le cas d'une métallisation de l'élément de protection sur la surface externe d'un substrat en matériau isolant de la forme d'un parallélépipède rectangle, il importe peu que les angles et les arrêtes intérieurs du parallélépipède soient arrondis ou biseautés, ceux-ci étant constitués en matériau isolant et ne présentant donc pas de propriété de blindage aux ondes électromagnétiques. Au contraire, il est avantageux que les angles et arrêtes extérieurs du parallélépipède soient arrondis ou biseautés, car ceux-ci constituent ou supportent la métallisation ou le blindage de la surface externe du parallélépipède.

Du fait de son étanchéité aux ondes électromagnétiques, l'élément de protection (1) ne doit pas recouvrir entièrement le téléphone mobile (2) car cela rendrait impossible tout protocole de communication nécessitant l'émission, et/ou la réception, par le téléphone mobile (2) d'ondes électromagnétiques vers, et/ou de, l'extérieur, respectivement. C'est pourquoi l'élément de protection (1) doit être ouvert.

Cette caractéristique de l'élément de protection (1) rend sa conception plus facile et son adaptation plus large. En effet, ne formant pas un élément fermé, mais ouvert, les dimensions de l'élément de protection (1) ne sont pas contraintes par les dimensions ou la forme du dos (22) du téléphone mobile (2).

Comme énoncé précédemment, le téléphone mobile (2) est maintenu dans la profondeur de l'élément de protection (1) avec l'écran (4) situé en vis-à-vis de l'interface ergonomique (21) du téléphone mobile (2) et en maintenant, de toute part, un espace électriquement isolant d'une épaisseur d'au moins 2 mm, préférentiellement de 3 mm à 8 mm, entre la partie métallique de l'élément de protection (1) et l'interface ergonomique du téléphone mobile (2).

Les critères de dimensionnement relatif correspondent en outre aux caractéristiques suivantes qui sont donnés à titre d'exemple non limitatif. La longueur de l'élément de protection est égale ou supérieure à 1,15 fois la longueur du téléphone mobile, la largeur de l'élément de protection est égale ou supérieure à 1,2 fois la largeur du téléphone mobile, et la profondeur de l'élément de protection est égale ou supérieure à 1,3 fois l'épaisseur du téléphone mobile. La longueur de l'élément de protection est de préférence inférieure ou égale à 1,3 fois la longueur du téléphone mobile, la largeur de l'élément de protection est de préférence inférieure ou égale à 1,3 fois la largeur du téléphone mobile et la profondeur de l'élément de protection est de préférence inférieure ou égale à 1,6 fois l'épaisseur du téléphone mobile. Les dimensions de l'élément de protection relativement aux dimensions du téléphone mobile sont à définir au cas par cas préférentiellement dans les fourchettes de valeurs mentionnées, afin d'optimiser la protection apportée, tout en minimisant l'encombrement de l'élément de protection.

Par exemple, la surface externe de l'écran (4) est métallisée, de façon continue ou discontinue, et l'écran (4) est de dimensions en longueur et en largeur sensiblement égales aux dimensions en longueur et en largeur du téléphone mobile (2). Le cadre (3) est de dimensions extérieures égales aux dimensions en longueur et en largeur susmentionnées de l'élément de protection (1). La profondeur de l'élément de protection (1) est environ égale à la profondeur du cadre (3) additionnée de l'épaisseur de l'écran (4).

A titre d'exemple non limitatif, la partie en matériau métallique bon conducteur de l'écran (4) consiste en une métallisation continue ou discontinue de la surface externe de l'écran, par exemple jusqu'à une partie du pourtour de la surface interne de l'écran. Des discontinuités dans la métallisation sont acceptables si leur taille caractéristique reste inférieure aux différentes longueurs d'onde des différentes normes de téléphonie mobile. Ainsi, la métallisation peut consister en un maillage d'un pas de grille régulier ou non inférieur ou égal à 10 mm réalisé en matériau bon conducteur constituant des lignes conductrices pouvant être d'une largeur de 0,5 mm et d'une épaisseur de 50 µm, ce maillage métallique étant, par exemple, incorporé dans ou sérigraphié sur la surface externe de l'écran. De même, la partie en matériau métallique bon conducteur du cadre (3) consiste en une métallisation continue ou discontinue de la surface externe du cadre. La continuité électrique entre ces deux parties métalliques du cadre et de l'écran est assurée par une partie conductrice de la liaison pivot, par exemple par une piste de contact électrique (42) consistant en une métallisation de la surface interne de l'écran autour de l'axe (41) de la liaison pivot, et/ou par contact entre le cadre et l'écran, de sorte que la partie métallique du cadre et la partie métallique de l'écran soient espacées entre elles de moins de 5 mm. A titre d'exemple, la piste de contact électrique (42) fait le tour de l'axe (41) de la liaison pivot ou une partie de ce tour seulement. Le fait que la métallisation de l'écran (4) recouvre par exemple jusqu'à une partie du pourtour de la surface interne de l'écran contribue également à la continuité électrique entre les parties métalliques du cadre (3) et de l'écran (4), en particulier si l'écran est en appui contre le cadre.

Il est à noter que la continuité électrique au moins en un point entre le cadre de protection et l'écran de protection est préférée au maintien d'un contact entre le cadre et l'écran. Toutefois, du fait que les téléphones mobiles émettent des ondes électromagnétiques d'une fréquence d'environ 1 GHz correspondant à une longueur d'onde de 30 cm environ, tout en conservant la continuité électrique entre le cadre et l'écran, des discontinuités physiques pouvant aller de quelques millimètres à quelques centimètres sont envisageables sans altérer la qualité de la protection apportée par le dispositif selon l'invention. Dans un test scientifique réalisé sur la présente invention, un certain nombre de feuilles de papier sont glissées entre l'écran de protection et le cadre de protection afin d'espacer progressivement l'écran du cadre, et le contact électrique entre l'écran et le cadre n'est assuré que par la piste de contact électrique faisant en partie le tour de l'axe de la liaison pivot. Le test a montré que dans la limite d'un écartement entre le cadre et l'écran inférieur à 2 mm, la qualité de la protection reste satisfaisante.

Par exemple, la continuité électrique entre le cadre (3) et l'écran (4) peut aussi bien être assurée par un axe (41) de la liaison pivot au moins partiellement réalisée en matériau bon conducteur et/ou une rondelle en matériau bon conducteur agencée autour de l'axe (41) de la liaison pivot et enserrée entre l'écran (4) et le cadre (3).

A titre d'exemple, la surface externe de l'écran (4) est légèrement bombée de façon à obtenir une concavité de l'élément de protection (1), l'aspect concave de l'élément de protection augmentant la qualité de la protection apportée.

A titre d'exemple non limitatif, l'écran (4) et/ou le cadre (3) comportent un ou plusieurs orifices (43) de taille caractéristique inférieure aux longueurs d'onde des ondes électromagnétiques utilisées en téléphonie mobile (2). Cette caractéristique est nécessaire afin que les ondes électromagnétiques ne puissent pas passer à travers les orifices (43) vers l'utilisateur. Typiquement, des orifices (43) d'une taille caractéristique inférieure à 1cm n'altèrent pas la qualité de la protection apportée. L(es)' orifice(s) (43) est(sont) préférentiellement soit situé(s) en vis-à-vis du microphone et/ou du haut-parleur et/ou tout autre dispositif compris dans le téléphone mobile (2) et chargé de recevoir et/ou émettre des ondes acoustiques, de façon à ce que ces ondes acoustiques ne soient pas altérées par l'élément de protection (1), soit situé(s) en face des connectiques du téléphone mobile.

A titre d'exemple non limitatif, le maintien du téléphone mobile (2) dans la profondeur de l'élément de protection (1) est assuré par un organe de fixation (5) en matériau isolant non conducteur destiné à être fixé, par exemple par clipsage (51), sur au moins une partie du pourtour du cadre (3) tout en appuyant sur le dos du téléphone.

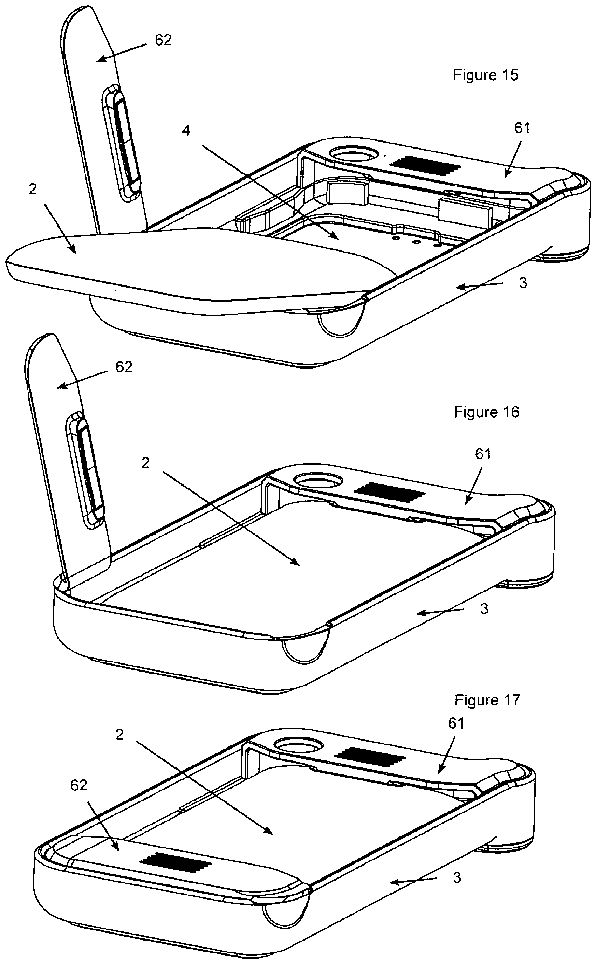

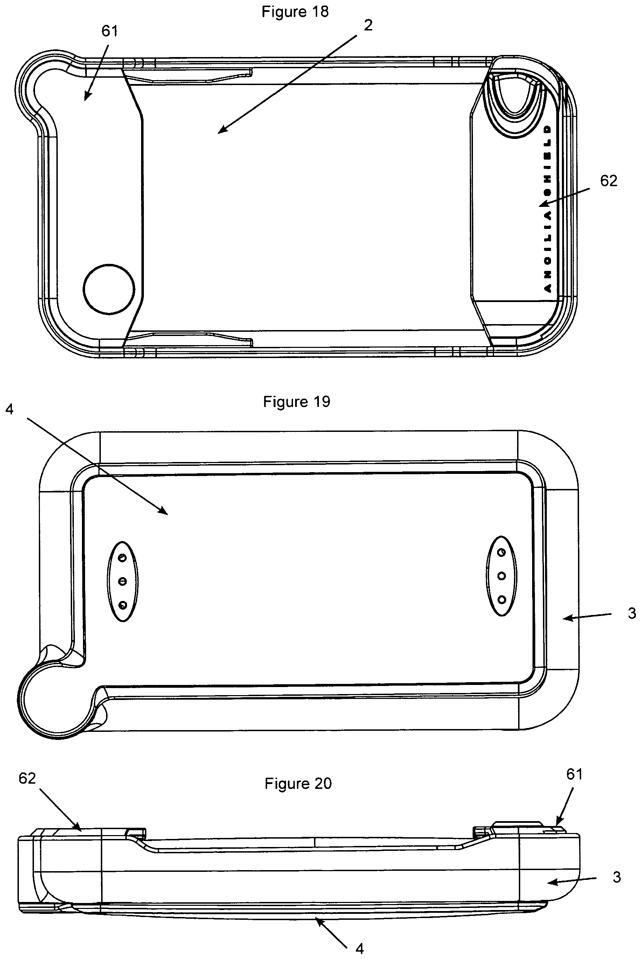

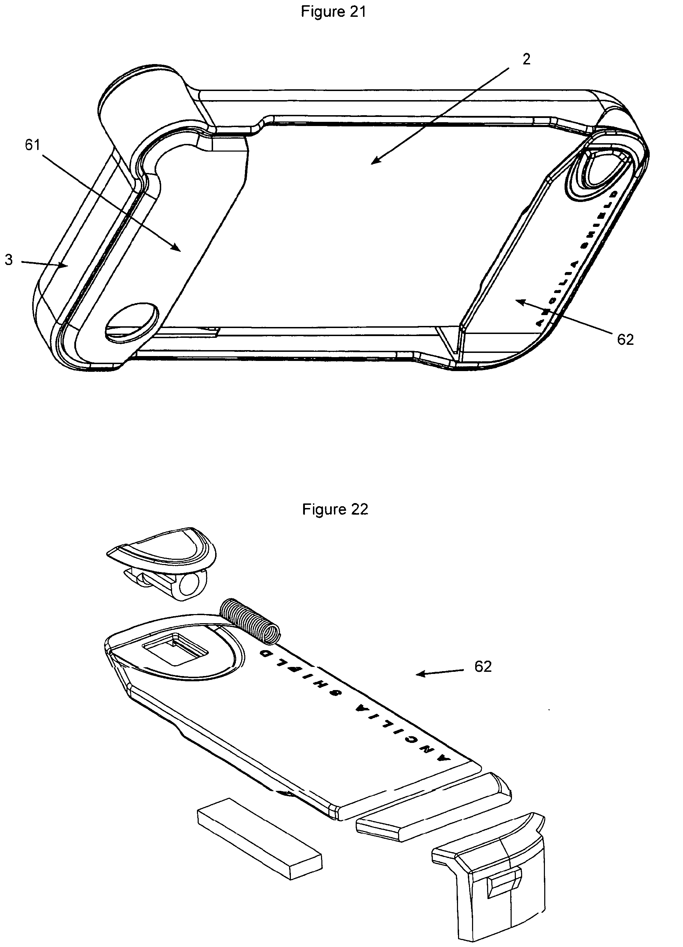

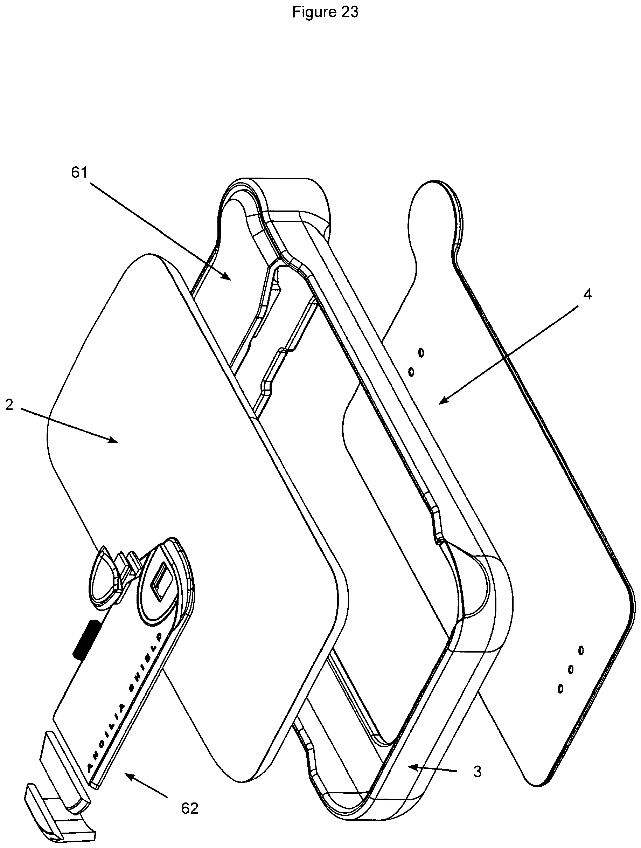

A titre d'exemple non limitatif et comme illustré sur les figures 15 à 23, le maintien du téléphone mobile (2) dans la profondeur de l'élément de protection (1) est assuré par un organe de fixation (6) en matériau isolant non conducteur, plastique ou élastomère, se composant de deux barres de fermeture (61, 62) montées sur le cadre de protection. Les deux barres de fermeture sont situées en vis-à-vis de l'écran de protection par rapport au cadre de protection. Autrement dit, les barres de fermeture sont situées dans le dos du téléphone mobile lorsque le téléphone mobile est disposé dans la profondeur de l'élément de protection, l'interface ergonomique du téléphone mobile étant située en vis-à-vis de l'écran de protection. Par exemple, une (61) des deux barres de fermeture est montée en haut du cadre de protection et l'autre (62) des deux barres de fermeture est montée en bas du cadre de protection. Au moins l'une des deux barres est articulée sur le pourtour du cadre entre au moins une position d'ouverture et une position de fermeture. Par exemple et comme illustré sur les figures 15 et 16, une (62) des deux barres (61, 62) est montée articulée sur le cadre de protection. L'articulation est par exemple une articulation de type pivot et la barre de fermeture articulée pivote autour de l'axe de la liaison pivot à la façon d'un battant. L'articulation est par exemple une articulation du type permettant le glissement sur le côté de la barre de fermeture articulée à la façon d'un coulissant. Par exemple, l'extrémité de la barre de fermeture opposée à l'extrémité articulée au cadre est agencée pour mettre en prise le cadre en position de fermeture de la barre de fermeture articulée. La mise en prise est assurée par un dispositif de verrouillage/déverrouillage par exemple du type d'un loquet agencé en partie dans ladite extrémité de la barre de fermeture opposée à l'extrémité articulée au cadre et en partie dans le pourtour interne du cadre. L'utilisateur peut ainsi faire pivoter ou coulisser la barre de fermeture articulée depuis une position de fermeture jusqu'à une position d'ouverture pour se faciliter l'insertion du téléphone mobile dans, ou le retrait du téléphone mobile depuis, l'élément de protection (Cf. plus particulièrement figures 15 à 17).

A titre d'exemple non limitatif, le maintien de l'espace d'au moins 2 mm entre la partie métallique de l'élément de protection (1) et l'interface ergonomique du téléphone mobile (2) est assuré par un matériau isolant. Ce matériau isolant est par exemple une mousse (non représentée) en matériau isolant non conducteur collée sur au moins une partie du pourtour interne du cadre (3). Le téléphone mobile (2) est alors maintenu enserré entre l'organe de fixation (5) et le matériau isolant dans la profondeur de l'élément de protection.

Premièrement, bien que la fonction de l'organe de fixation (5) soit précisément de fixer le téléphone mobile (2) dans la profondeur de l'élément de protection (1), il peut également faire fonction de détrompeur. En effet, l'organe de fixation (5), tel qu'illustré sur les figures, recouvre une bonne partie du dos (22) du téléphone mobile (2) pour que l'utilisateur, ayant mis son téléphone à l'envers dans l'élément de protection (1), ne sache pas se servir de son interface ergonomique (21).

Deuxièmement, il est à noter que le matériau isolant, par exemple la mousse, peut être soit fourni préinstallé ou non avec le dispositif de protection selon l'invention, soit fourni à part, pour que l'utilisateur puisse par exemple remplacer la mousse par une mousse neuve, lorsqu'il change de téléphone mobile (2) en conservant le même dispositif de protection. Dans ce dernier cas, des moyens sont prévus pour permettre le remplacement de la mousse et son maintien.

A titre d'exemple non limitatif, un logement (44) est pratiqué dans le pourtour de la surface interne de l'écran (4). Ce logement est destiné à accueillir un aimant (441). Cet aimant (441) est agencé pour attirer un aimant (311) logé dans un logement (31) pratiqué dans le pourtour extérieur du cadre (3) en vis-à-vis du logement (44) pratiqué dans le pourtour de la surface interne de l'écran, lorsque l'écran (4) est en position de recouvrement du cadre (3). De cette façon, l'écran (4) est sensiblement maintenu lorsqu'il se trouve en position de recouvrement du cadre (3).

A titre d'exemple non limitatif, la liaison pivot est agencée dans une saillie (45) formant le coin de l'écran (4) par lequel l'écran est lié au cadre (3) et dans une saillie (32) formant le coin du cadre (3) par lequel le cadre est lié à l'écran. L'axe (41) de la liaison pivot est fixé sur la surface interne de l'écran (4) et au centre de la saillie (45) de l'écran pour se loger dans un alésage (33) traversant pratiqué au centre de la saillie (32) du cadre (3). Ainsi, les saillies (45, 32) de l'écran (4) et du cadre (3) coopèrent entre elles.

A titre d'exemple non limitatif, l'axe (41) de la liaison pivot fixé à l'écran (4) est d'une longueur déterminée pour traverser, et dépasser par une extrémité, l'alésage (33) traversant pratiqué dans la saillie (32) du cadre (3). Ainsi, l'extrémité de l'axe (41) dépassant peut être mise en prise avec un arrêt d'axe (6) pour empêcher l'axe (41) de la liaison pivot de quitter l'alésage (33) traversant. La longueur de l'axe (41) pivot est en outre telle que la surface interne de l'écran (4) frotte contre une partie de la surface externe du cadre (3) lors du pivotement de l'écran par rapport au cadre.

Par exemple, l'arrêt d'axe (6) peut être métallique ou en matière plastique élastique. Dans ce second cas, il peut exercer une force de rappel élastique de l'écran (4), plus particulièrement de la saillie (45) de l'écran, en position de butée contre le cadre (3), plus particulièrement contre la saillie (32) du cadre.

Il est intéressant dans le cas d'un écran (4) monté pivotant sur le cadre (3) que la liaison pivot soit agencée pour limiter et/ou indexer et/ou faciliter le pivotement, par exemple, entre au moins les deux positions de recouvrement ou de non-recouvrement du cadre par l'écran.

Au titre d'un premier exemple non limitatif, le pivotement de l'écran (4) par rapport au cadre (3) est limité par l'agencement suivant de la liaison pivot. La saillie (45) de l'écran comporte un ergot (46) fixé à côté de l'axe (41) de la liaison pivot et de façon excentrée par rapport à celui-ci. L'ergot (46) coopère avec un retrait de matière (34) pratiqué dans la saillie (32) du cadre (3) sur le trajet de rotation de l'ergot (46) entraîné par le pivotement de l'écran (4). De cette façon, le pivotement de l'écran (4) par rapport au cadre (3) au moins entre la position de recouvrement du cadre par l'écran et la position de non-recouvrement du cadre par l'écran se trouve limité par la coopération de l'ergot (46) avec le retrait de matière (34).

Dans l'exemple, précédemment donné selon lequel deux sens de pivotement et trois positions de l'écran par rapport au cadre sont envisagés, l'ergot (46) de l'écran (4) vient en butée contre une première des extrémités du retrait de matière (34) du cadre (3) de telle façon que l'écran (4) soit en une position de non-recouvrement du cadre à gauche et forme avec ce dernier un angle 93° environ ou l'ergot (46) de l'écran (4) vient en butée contre une seconde des extrémités du retrait de matière (34) du cadre (3) de telle façon que l'écran (4) soit en une position de non-recouvrement du cadre à droite et forme avec ce dernier un angle 90° environ.

Au titre d'un second exemple non limitatif, le pivotement de l'écran (4) par rapport au cadre (3) est indexé par l'agencement suivant de la liaison pivot. La saillie (45) de l'écran comporte un logement (47) fixé à côté de l'axe (41) de la liaison pivot et de façon excentrée par rapport à celui-ci. Ce logement (47) est destiné à accueillir un aimant (471). De plus, la saillie (32) du cadre (3) comporte au moins un alésage destiné à accueillir un aimant, chaque alésage étant agencé pour que l'aimant (471) logé dans l'écran (4) passe en vis-à-vis de l'aimant logé dans chaque alésage du cadre (3) sur le trajet de pivotement de l'écran (4) par rapport au cadre. Par exemple, l'aimant (471) logé dans la saillie (45) de l'écran est agencé pour attirer un premier aimant (351) logé dans un premier alésage (35) de la saillie (32) du cadre (3), et maintenir l'écran (4) en positon de recouvrement du cadre (3). De cette façon, une première indexation du pivotement de l'écran (4) par rapport au cadre (3) correspond à la position de recouvrement du cadre par l'écran. De plus, l'aimant (471) logé dans la saillie (45) de l'écran (4) peut être agencé pour attirer un second aimant (361) logé dans un second alésage (36) de la saillie (32) du cadre (3), et maintenir l'écran (4) en position de non-recouvrement du cadre (3). De cette façon, une seconde indexation du pivotement de l'écran (4) par rapport au cadre (3) correspond à la position de non-recouvrement du cadre par l'écran. Par exemple, un troisième aimant (371) logé dans un troisième alésage (37) de la saillie (32) du cadre (3) entre le premier et second alésage (35, 36) est agencé pour repousser l'aimant (471) logé dans la saillie (45) de l'écran (4). De cette façon, l'écran (4) se trouvant dans une position intermédiaire entre la position de recouvrement et la position de non-recouvrement du cadre (3) se trouve à la fois repousser par le troisième aimant (371) et plus ou moins attiré par l'un des premier et second aimants (351, 361) et bascule volontiers vers l'une ou l'autre des positions de recouvrement ou de non-recouvrement du cadre (3).

Au titre d'un troisième exemple non limitatif, le pivotement de l'écran par rapport au cadre est facilité par l'agencement suivant de la liaison pivot. Une rampe mécanique (38) est agencée sur le pourtour de l'alésage traversant (33) pratiqué dans la saillie (32) du cadre (3) pour coopérer avec une nervure (48) pratiquée sur l'écran (4) de façon accolée et radiale à l'axe (41) de la liaison pivot. La rampe mécanique (38) présente une encoche dans laquelle se loge la nervure (48) pour maintenir l'écran (4) en position de recouvrement du cadre (3). De plus, la rampe mécanique (38) présente une pente descendante depuis une extrémité haute de l'encoche, la nervure (48) glissant sur la pente pour faciliter le pivotement de l'écran (4) depuis une position de léger soulèvement de l'écran à une extrémité haute de l'encoche jusqu'au bas de la pente. L'homme de métier notera que le pivotement est non seulement faciliter par le fait que la pente est descendante, mais aussi par le léger soulèvement de l'écran qui limite le frottement de l'écran (4) sur le cadre (3), voire l'annule sur une partie du pivotement. De même, un arrêt d'axe (6) aux propriétés élastiques peut faciliter le pivotement de l'écran (4) depuis une position de léger soulèvement de l'écran à une extrémité haute de l'encoche jusqu'au bas de la pente de la rampe mécanique (38), en tendant à ramener l'écran (4) en position de butée contre le cadre (3).

Il est non seulement envisageable, mais également avantageux et préféré que ces trois exemples ci-dessus d'agencement de la liaison pivot, ou au moins deux d'entre eux, soient combinés, de façon à limiter et indexer et faciliter le pivotement de l'écran (4) par rapport au cadre (3), et de façon à mieux maintenir l'écran en position de recouvrement du cadre dans laquelle l'écran (4) et le cadre (3) forment l'élément de protection (1). A titre d'exemple non limitatif, le logement (47) de l'écran (4), fixé à côté de l'axe (41) de la liaison pivot de façon excentrée par rapport à celui-ci et destiné à accueillir un aimant (471), peut dans le même temps faire fonction d'ergot (46), également fixé à côté de l'axe (41) de la liaison pivot de façon excentrée par rapport à celui-ci et coopérant avec le retrait de matière (34) pratiqué dans la saillie (32) du cadre (3) sur le trajet de rotation de l'ergot (46) entraîné par le pivotement de l'écran (4). De plus, ainsi agencée la liaison pivot autorise l'utilisateur à ne pas avoir à accompagner le pivotement de l'écran sur tout son trajet, l'utilisateur n'ayant qu'à amorcer ce pivotement pour que l'écran aille de lui-même se placer dans une position de recouvrement ou de non-recouvrement du cadre.

A titre d'exemple dans le cas où deux sens de pivotement et trois positions de l'écran par rapport au cadre sont envisagées, il est aisé pour un homme de métier de disposer les trois agencements donnés en exemple ci-dessous selon une symétrie (illustrée sur les figures) autorisant une première position de recouvrement du cadre (3) par l'écran (4), une seconde position de non-recouvrement du cadre par l'écran par un pivotement de l'écran à gauche du cadre et une troisième position de non-recouvrement du cadre par l'écran par un pivotement de l'écran à droite du cadre, le pivotement étant limité et indexé et facilité comme précédemment décrit.

Le dispositif de protection selon la présente invention a fait le sujet d'une étude scientifique menée par le Pr. Joseph Saillard du laboratoire IREENA de l'université de Nantes.

Il est à noter tout d'abord les résultats d'un test consistant à mesurer la qualité de la protection apportée par le dispositif selon l'invention en présence, puis en absence, des aimants dans le système d'indexation de la liaison pivot. Ce test a révélé que la présence des aimants n'affecte pas la qualité de la protection.

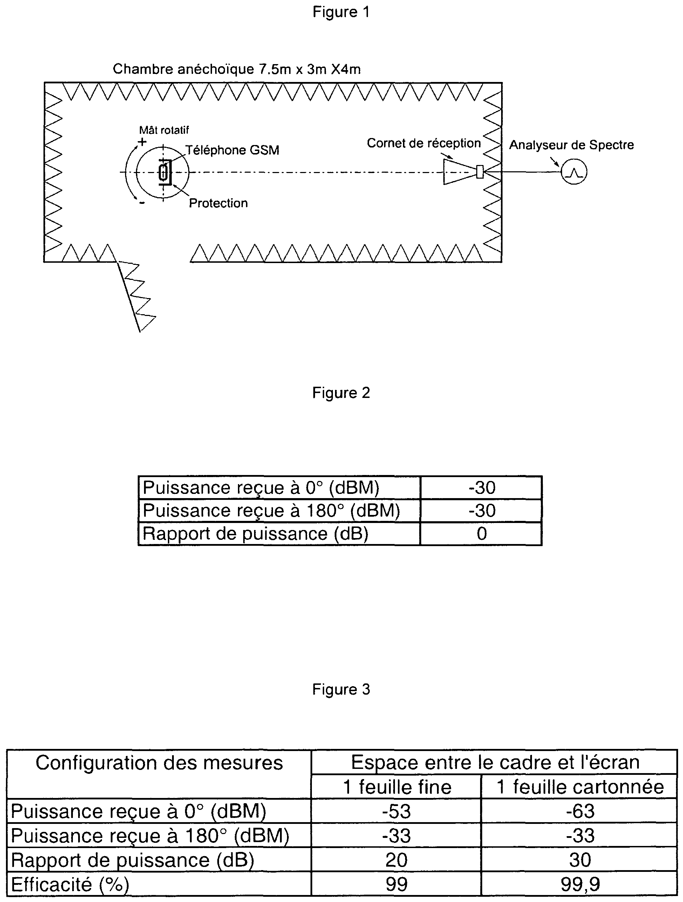

La figure 1 illustre schématiquement le banc de test situé dans une chambre anéchoïque et réalisé pour les mesures. Ce banc comprend un téléphone mobile (2), de dimension en mm 106*50*15 et émettant des ondes électromagnétiques continues d'une fréquence centrale de 913 MHz. Le banc comprend en outre un élément de protection (1) selon l'invention de dimensions en mm 122*67*26, un mât rotatif et un cornet de réception relié à un moyen de mesures ou analyseur de spectre situé à l'extérieur de la chambre anéchoïque.

La puissance émise par le téléphone mobile (2) est relevée au moment où le téléphone établit une liaison avec une antenne relais lors de la réception d'un appel. C'est une phase privilégiée pour les mesures puisque le téléphone émet un maximum de puissance à cet instant.

Les expérimentations se déroulent en laissant la porte de la chambre entre-ouverte pour garantir une liaison téléphone/relais et à minimiser les multi-trajets reçues sur le cornet de réception.

Les résultats présentés ci-après sont donnés selon deux positions angulaires :
- 0° : Face avant du téléphone vers le cornet de réception, ce qui correspond à la position pour laquelle on cherche à protéger l'utilisateur,
- 180° : Face arrière du téléphone vers le cornet de réception, ce qui correspond à la position pour laquelle on cherche à privilégier l'émission du téléphone.

Pour chacune des configurations de mesures, plusieurs essais ont été effectués pour s'assurer de la cohérence des résultats. La valeur des puissances pouvant évoluer de quelques dB entre deux mesures, on ne conserve que la valeur la plus défavorable (la plus élevée pour 0° et la plus faible pour 180°). Ainsi, l'efficacité obtenue est l'efficacité minimale mesurée.

Le tableau de la figure 2 présente les résultats obtenus en utilisant le téléphone sans élément de protection (1).

De plus, les mesures ont été effectuées avec une feuille de papier fine, puis avec une feuille cartonnée de un millimètre d'épaisseur, glissée entre l'écran (4) et le cadre (3) de l'élément de protection (1).

Les résultats sont présentés dans le tableau de la figure 3. Les résultats obtenus en utilisant le téléphone avec élément de protection (1) sont excellents et correspondent à une atténuation de 30 dB, soit une atténuation d'une efficacité supérieure à 99% de la puissance des ondes électromagnétiques émises, en direction de l'utilisateur grâce au dispositif de protection selon la présente invention.

Dans la présente description, de nombreux détails spécifiques sont fournis à titre illustratif et nullement limitatif, de façon à détailler précisément l'invention. L'homme de métier comprendra cependant que l'invention peut être réalisée en l'absence d'un ou plusieurs de ces détails spécifiques ou avec des variantes. A d'autres occasions, certains aspects ne sont pas détaillés de façon à éviter d'obscurcir et alourdir la présente description et l'homme de métier comprendra que des moyens divers et variés pourront être utilisés et que l'invention n'est pas limitée aux seuls exemples décrits.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de protection biologique configuré pour protéger contre les ondes électromagnétiques émises par un téléphone mobile (2), qui comporte au moins un cadre (3) et un écran (4), l'écran étant de dimensions en longueur et en largeur suffisantes pour couvrir au moins le périmètre interne du cadre (3), **caractérisé en ce que** l'écran (4) et le cadre (3) sont liés, par un de leurs coins, par une liaison pivot dont l'axe (41) est perpendiculaire à l'écran (4) et au cadre (3), pour permettre le pivotement de l'écran (4) par rapport au cadre (3), au moins dans un sens et entre deux positions, une position de recouvrement du cadre (3) par l'écran (4) et une position de non-recouvrement du cadre par l'écran,
l'écran (4) et le cadre (3) étant chacun réalisé au moins en partie en matériau métallique bon conducteur, ces parties étant agencées soit pour assurer une continuité électrique entre elles, soit pour que l'espace entre elles soit inférieur à 5 mm, au moins lorsque l'écran recouvre le cadre, le dispositif de protection biologique étant configuré de manière à maintenir le téléphone mobile dans la profondeur du dispositif de protection biologique de telle sorte que l'écran (4) soit situé en vis-à-vis de l'interface ergonomique (21) du téléphone mobile (2) et en maintenant, de toute part, un espace électriquement isolant entre la partie métallique de l'élément de protection (1) et le téléphone mobile (2).

2. Dispositif selon la revendication 1, **caractérisé en ce que** l'espace électriquement isolant entre la partie métallique de l'élément de protection (1) et l'interface ergonomique du téléphone mobile (2) est d'une épaisseur d'au moins 2 mm, de préférence comprise entre 3 mm et 8 mm.

3. Dispositif selon la revendication 1, **caractérisé en ce que** la partie en matériau métallique bon conducteur de l'écran (4) consiste en une métallisation continue ou discontinue de la surface externe de l'écran, la partie en matériau métallique bon conducteur du cadre (3) consiste en une métallisation continue ou discontinue de la surface externe du cadre.

4. Dispositif selon la revendication 1, **caractérisé en ce que** le dispositif est configuré de manière à ce que l'espace électriquement isolant répond à des critères de dimensionnement relatif, ces critères de dimensionnement relatif correspondent à une longueur de l'élément de protection égale ou supérieure à 1,15 fois la longueur du téléphone mobile, une largeur de l'élément de protection égale ou supérieure à 1,2 fois la largeur du téléphone mobile, et une profondeur de l'élément de protection égale ou supérieure à 1,3 fois l'épaisseur du téléphone mobile.

5. Dispositif selon la revendication 1, **caractérisé en ce que** le dispositif est configuré de manière à ce que l'espace électriquement isolant répond à des critères de dimensionnement relatif, lesdits critères de dimensionnement relatif correspondent en outre à une longueur de l'élément de protection de préférence inférieure ou égale à 1,3 fois la longueur du téléphone mobile, une largeur de l'élément de protection de préférence inférieure ou égale à 1,3 fois la largeur du téléphone mobile et une profondeur de l'élément de protection de préférence inférieure ou égale à 1,6 fois l'épaisseur du téléphone mobile.

6. Dispositif selon la revendication 1, **caractérisé en ce que** la surface externe de l'écran (4) est légèrement bombée de façon à obtenir une concavité de l'élément de protection (1).

7. Dispositif selon la revendication 1, **caractérisé en ce que** l'écran (4) et/ou le cadre (3) comportent un ou plusieurs orifices (43) de taille inférieure aux longueurs d'onde des ondes électromagnétiques utilisées en téléphonie mobile, l(es)' orifice(s) (43) étant soit configuré(s) de manière à être situé(s) en vis-à-vis du microphone et/ou du haut-parleur et/ou tout autre dispositif compris dans le téléphone mobile (2) et chargé de recevoir et/ou émettre des ondes acoustiques, de façon à ce que ces ondes acoustiques ne soient pas altérées par l'élément de protection (1), soit configuré(s) de manière à être situé(s) en face des connectiques du téléphone mobile.

8. Dispositif selon la revendication 1, **caractérisé en ce qu'**il comprend un organe de fixation (5 ou 6) en matériau isolant non conducteur configuré pour être fixé sur au moins une partie du pourtour du cadre (3) tout en appuyant sur le dos du téléphone mobile (2) et **en ce qu'**il comprend un matériau isolant non conducteur collé sur au moins une partie du pourtour interne du cadre (3), configuré de manière à maintenir le téléphone mobile (2) enserré entre l'organe de fixation (5) et le matériau isolant, et à assurer le maintien de l'espace d'au moins 2mm entre la partie métallique de l'élément de protection (1) et l'interface ergonomique du téléphone mobile (2).

9. Dispositif selon la revendication 8, **caractérisé en ce que** l'organe de fixation (6) consiste en deux barres (61, 62) de fermeture montées sur le cadre de protection en vis-à-vis de l'écran de protection, au moins l'une (62) des deux barres étant articulée au pourtour du cadre entre au moins une position d'ouverture et une position de fermeture.

10. Dispositif selon la revendication 1, **caractérisé en ce qu'**un logement (44) destiné à accueillir un aimant (441) est pratiqué dans le pourtour de la surface interne de l'écran (4), cet aimant (441) étant agencé pour attirer un aimant (311) logé dans un logement (31) pratiqué dans le pourtour extérieur du cadre (3) en vis-à-vis du logement (44) pratiqué dans le pourtour de la surface interne de l'écran (4), lorsque l'écran est en position de recouvrement du cadre, pour maintenir l'écran en position de recouvrement du cadre.

11. Dispositif selon la revendication 1, **caractérisé en ce que** la liaison pivot est agencée dans une saillie (45) formant le coin de l'écran (4) par lequel l'écran (4) est lié au cadre (3) et dans une saillie (32) formant le coin du cadre (3) par lequel le cadre est lié à l'écran, les saillies (45, 32) de l'écran (4) et du cadre (3) coopérant entre elles, l'axe (41) de la liaison pivot étant fixé sur la surface interne de l'écran (4) et au centre de la saillie (45) de l'écran pour se loger dans un alésage (33) traversant pratiqué au centre de la saillie (32) du cadre (3).

12. Dispositif selon la revendication 11, **caractérisé en ce que** l'axe (41) de la liaison pivot est d'une longueur déterminée pour traverser, et dépasser par une extrémité, l'alésage (33) traversant pratiqué dans la saillie (32) du cadre (3), l'extrémité de l'axe (41) dépassant étant mise en prise avec un arrêt d'axe (6) pour empêcher l'axe (41) de quitter l'alésage (33) traversant, la surface interne de l'écran (4) frottant en pivotant contre une partie de la surface externe du cadre (3).

13. Dispositif selon la revendication 11, **caractérisé en ce que** la saillie (45) de l'écran (4) comporte un ergot (46) fixé à côté de l'axe (41) de la liaison pivot et de façon excentrée par rapport à celui-ci, l'ergot (46) coopérant avec un retrait de matière (34) pratiqué dans la saillie (32) du cadre (3) sur le trajet de rotation de l'ergot (46) entraîné par le pivotement de l'écran (4), la coopération de l'ergot (46) avec le retrait de matière (34) limitant le pivotement de l'écran (4) par rapport au cadre (3) au moins entre la position de recouvrement du cadre par l'écran et la position de non-recouvrement du cadre par l'écran.

14. Dispositif selon la revendication 11, **caractérisé en ce que** la saillie (45) de l'écran (4) comporte un logement (47) fixé à côté de l'axe (41) de la liaison pivot et de façon excentrée par rapport à celui-ci, le logement (47) étant destiné à accueillir un aimant (471), et la saillie (32) du cadre (3) comporte au moins un alésage (35) destiné à accueillir un aimant (351), le logement (47) et chaque alésage étant agencés pour que l'aimant (471) logé dans l'écran (4) passe en vis-à-vis de l'aimant logé dans chaque alésage du cadre (3) sur le trajet de pivotement de l'écran par rapport au cadre.

15. Dispositif selon la revendication 14, **caractérisé en ce que** l'aimant (471) logé dans la saillie (45) de l'écran (4) est agencé pour attirer un premier aimant (351) logé dans un premier alésage (35) de la saillie (32) du cadre (3), et maintenir l'écran en positon de recouvrement du cadre, et pour attirer un second aimant (361) logé dans un second alésage (36) de la saillie (32) du cadre (3), et maintenir l'écran en position de non-recouvrement du cadre.

16. Dispositif selon la revendication 15, **caractérisé en ce qu'**un troisième aimant (371) logé dans un troisième alésage (37) de la saillie (32) du cadre entre le premier et le second alésages (35, 36) est agencé pour repousser l'aimant (471) logé dans la saillie (45) de l'écran (4), pour repousser l'écran se trouvant dans une position intermédiaire entre la position de recouvrement et la position de non-recouvrement vers l'une ou l'autre de ces positions.

## Patentansprüche

1. Biologische Schutzvorrichtung zum Schutz vor elektromagnetischen Wellen, die von einem Mobiltelefon (2) ausgesendet werden, das mindestens einen Rahmen (3) und einen Bildschirm (4) umfasst, wobei der Bildschirm eine ausreichende Länge und Breite aufweist, um abzudecken zumindest der Innenumfang des Rahmens (3), **dadurch gekennzeichnet, dass** der Bildschirm (4) und der Rahmen (3) durch eine ihrer Ecken durch eine Schwenkverbindung verbunden sind, deren Achse (41) senkrecht dazu steht den Bildschirm (4) und den Rahmen (3), um es dem Bildschirm (4) zu ermöglichen, in Bezug auf den Rahmen (3) zumindest in einer Richtung und zwischen zwei Positionen eine Abdeckposition des Rahmens (3) zu schwenken durch den Bildschirm (4) und eine Position der Nichtwiederherstellung des Rahmens durch den Bildschirm, wobei der Schirm (4) und der Rahmen (3) jeweils zumindest teilweise aus einem guten Leitermaterial hergestellt sind, wobei diese Teile entweder so angeordnet sind, dass sie eine elektrische Kontinuität zwischen ihnen gewährleisten, oder dass der Abstand zwischen ihnen weniger als 5 mm beträgt, zumindest wenn der Bildschirm den Rahmen abdeckt, wobei die biologische Schutzvorrichtung dafür ausgelegt ist, das Mobiltelefon (2) so zu halten, dass sich der Bildschirm (4) gegenüber der ergonomischen Schnittstelle (21) des Mobiltelefons (2) befindet von allen Seiten einen elektrisch isolierenden Raum zwischen dem Metallteil des Schutzelements (1) und dem Mobiltelefon (2) zu halten.

2. Vorrichtung nach Anspruch 1, **dadurch gekennzeichnet, dass** der elektrisch isolierende Raum zwischen dem Metallteil des Schutzelements (1) und der ergonomischen Schnittstelle des Mobiltelefons (2) mindestens 2 mm dick ist, vorzugsweise zwischen 3 mm und 8 mm.

3. Vorrichtung nach Anspruch 1, **dadurch gekennzeichnet, dass** der Abschnitt des gut leitenden Metallmaterials des Schirms (4) aus einer kontinuierlichen oder diskontinuierlichen Metallisierung der Außenfläche des Schirms besteht, wobei der Teil des gut leitenden Metallmaterials des Rahmens (3) besteht aus einer kontinuierlichen oder diskontinuierlichen Metallisierung der Außenfläche des Rahmens.

4. Vorrichtung nach Anspruch 1, **dadurch gekennzeichnet, dass** die Vorrichtung derart ausgebildet ist, dass der elektrisch isolierende Raum relative Bemessungskriterien erfüllt, wobei diese relativen Bemessungskriterien einer Länge des Schutzelements gleich oder größer entsprechen 1,15 mal die Länge des Mobiltelefons, eine Breite des Schutzelements gleich oder größer als das 1,2-fache der Breite des Mobiltelefons und eine Tiefe des Schutzelements gleich oder größer als das 1,3-fache die Dicke des Mobiltelefons.

5. Vorrichtung nach Anspruch 1, **dadurch gekennzeichnet, dass** die Vorrichtung derart ausgebildet ist, dass der elektrisch isolierende Raum relative Dimensionierungskriterien erfüllt, wobei diese relativen Dimensionierungskriterien zusätzlich zu einer Länge des Schutzelements der Vorrichtung korrespondieren, vorzugsweise kleiner oder gleich dem 1,3-fachen der Länge des Mobiltelefons, wobei eine Breite des Schutzelements vorzugsweise kleiner oder gleich dem 1,3-fachen der Breite des Mobiltelefons und eine Tiefe des Schutzelements vorzugsweise geringer ist oder gleich dem 1,6-fachen der Dicke des Mobiltelefons.

6. Vorrichtung nach Anspruch 1, **dadurch gekennzeichnet, dass** die äußere Oberfläche des Schirms (4) leicht gekrümmt ist, um eine Konkavität des Schutzelements (1) zu erhalten.

7. Vorrichtung nach Anspruch 1, **dadurch gekennzeichnet, dass** der Bildschirm (4) und / oder der Rahmen (3) eine oder mehrere Öffnungen (43) aufweist, die kleiner sind als die Wellenlängen der elektromagnetischen Wellen, die in der Mobiltelefonie verwendet werden, der / die Port (s) (43) so konfiguriert sind, dass sie sich gegenüber dem Mikrofon und / oder dem Lautsprecher und / oder einer anderen Vorrichtung befinden, die in dem Mobiltelefon (2) enthalten ist; und verantwortlich für das Empfangen und / oder Emittieren von akustischen Wellen, so dass diese akustischen Wellen nicht durch das Schutzelement (1) verändert werden, oder so konfiguriert sind, dass sie sich gegenüber den Anschlüssen des Mobiltelefons befinden.

8. Vorrichtung nach Anspruch 1, **dadurch gekennzeichnet, dass** die ein Befestigungselement (5 oder 6) aus nicht leitfähigem Isoliermaterial aufweist, das so konfiguriert ist, dass es an mindestens einem Teil des Umfangs des Rahmens (3) befestigt ist, während es auf die Rückseite des Rahmens drückt Mobiltelefon (2) und **dadurch gekennzeichnet, dass** es ein nicht leitendes Isoliermaterial aufweist, das an mindestens einem Teil des Innenumfangs des Rahmens (3) haftet und so konfiguriert ist, dass es das Mobiltelefon (2) zwischen dem Befestigungselement hält (5) und das Isoliermaterial, und um den Abstand von mindestens 2 mm zwischen dem Metallteil des Schutzelements (1) und der ergonomischen Schnittstelle des Mobiltelefons (2) zu halten.

9. Vorrichtung nach Anspruch 8, **dadurch gekennzeichnet, dass** das Befestigungselement (6) aus zwei Schließleisten (61, 62) besteht, die zumindest an dem Schutzrahmen gegenüber dem Schutzschild angebracht sind eine (62) der zwei Stangen ist um den Rahmen herum zwischen mindestens einer offenen Position und einer geschlossenen Position angelenkt.

10. Vorrichtung nach Anspruch 1, **dadurch gekennzeichnet, dass** ein Gehäuse (44) zur Aufnahme eines Magneten (441) im Umfang der Innenfläche des Schirms (4) ausgebildet ist, wobei der Magnet (441) so angeordnet ist, dass er angezogen wird ein Magnet (311), der in einem Gehäuse (31) untergebracht ist, das in dem äußeren Umfang des Rahmens (3) gegenüber dem Gehäuse (44) ausgebildet ist, das in dem Umfang der inneren Oberfläche des Schirms (4) ausgebildet ist der Bildschirm befindet sich in der Abdeckposition des Rahmens, um den Bildschirm in der Rahmenabdeckungsposition zu halten.

11. Vorrichtung nach Anspruch 1, **dadurch gekennzeichnet, dass** die Drehverbindung in einem Vorsprung (45) angeordnet ist, der die Ecke des Schirms (4) bildet, mit der der Schirm (4) mit dem Rahmen (3) und in einem Vorsprung verbunden ist (32) Bilden der Ecke des Rahmens (3), mit der der Rahmen mit dem Schirm verbunden ist, wobei die Vorsprünge (45, 32) des Schirms (4) und des Rahmens (3) miteinander zusammenwirken, wobei die Achse (41) der Schwenkverbindung, die an der Innenfläche des Schirms (4) und in der Mitte des Vorsprungs (45) des Schirms befestigt ist, um in eine Durchgangsbohrung (33) zu passen, die in der Mitte des Vorsprungs (32) ausgebildet ist.) des Rahmens (3).

12. Vorrichtung nach Anspruch 11, **dadurch gekennzeichnet, dass** die Achse (41) der Schwenkverbindung eine bestimmte Länge aufweist, um hindurch zu ragen, und an einem Ende die im Vorsprung (32) der Bohrung ausgebildete Durchgangsbohrung (33) vorsteht Rahmen (3), wobei das Ende des überhängenden Stifts (41) mit einem Achsenanschlag (6) in Eingriff steht, um zu verhindern, dass der Stift (41) die Bohrung (33) durch die innere Oberfläche verlässt des Schirms (4) reiben durch Schwenken gegen einen Teil der Außenfläche des Rahmens (3).

13. Vorrichtung nach Anspruch 11, **dadurch gekennzeichnet, dass** der Vorsprung (45) des Schirms (4) eine Lasche (46) aufweist, die neben der Achse (41) der Schwenkverbindung und exzentrisch dazu befestigt ist wobei die Nase (46) mit einem Materialabzug (34) zusammenwirkt, der in dem Vorsprung (32) des Rahmens (3) in dem Drehweg der Nase (46) ausgebildet ist, der durch das Verschwenken des Siebs angetrieben wird (4), das Zusammenwirken der Lasche (46) mit dem Materialabtrag (34) begrenzt die Verschwenkung des Siebes (4) relativ zum Rahmen (3) zumindest zwischen der Position der Wiederherstellung des Rahmens durch die Bildschirm und die Position der Nichtwiederherstellung des Rahmens durch den Bildschirm.

14. Vorrichtung nach Anspruch 11, **dadurch gekennzeichnet, dass** der Vorsprung (45) des Schirms (4) ein Gehäuse (47) aufweist, das neben der Achse (41) der Schwenkverbindung und exzentrisch dazu befestigt ist wobei das Gehäuse (47) einen Magneten (471) aufnehmen soll und der Vorsprung (32) des Rahmens (3) mindestens eine Bohrung (35) zur Aufnahme eines Magneten (351) aufweist, wobei das Gehäuse (47) und jede Bohrung so angeordnet ist, dass der Magnet (471), der in dem Schirm (4) untergebracht ist, gegenüber dem in jeder Bohrung des Rahmens (3) im Schwenkweg des Magneten untergebrachten Magneten vorbeiläuft Bildschirm relativ zum Rahmen.

15. Vorrichtung nach Anspruch 14, **dadurch gekennzeichnet, dass** der Magnet (471), der in dem Vorsprung (45) des Schirms (4) untergebracht ist, so angeordnet ist, dass er einen ersten Magneten (351) anzieht, der in einer ersten Bohrung (35) aufgenommen ist (32) von dem Rahmen (3) vorstehen und den Schirm in der Abdeckposition des Rahmens halten und einen zweiten Magneten (361) anziehen, der in einer zweiten Bohrung (36) des Vorsprungs (32) des Rahmens (3) untergebracht ist; und halten Sie den Bildschirm in der Nicht-Wiederherstellungsposition des Rahmens.

16. Vorrichtung nach Anspruch 15, **dadurch gekennzeichnet, dass** ein dritter Magnet (371) in einer dritten Bohrung (37) des Vorsprungs (32) des Rahmens zwischen der ersten und der zweiten Bohrung (35, 36) untergebracht ist, um die abzustoßen Magnet (471), der in dem Vorsprung (45) des Schirms (4) untergebracht ist, um den Schirm in einer Zwischenposition zwischen der Überlappungsposition und der Nicht-Überlappungsposition in Richtung des einen oder des anderen zurückzudrücken andere dieser Positionen.

## Claims

1. Biological protection device configured to protect against electromagnetic waves emitted by a mobile telephone (2), which comprises at least one frame (3) and one screen (4), the screen being of sufficient length and width to cover at least the internal perimeter of the frame (3), **characterized in that** the screen (4) and the frame (3) are connected by one of their corners by a pivot connection whose axis (41) is perpendicular to the screen (4) and the frame (3) to allow the screen (4) to pivot with respect to the frame (3), at least in one direction and between two positions, a cover position of the frame (3) by the screen (4) and a position of non-recovery of the frame by the screen, the screen (4) and the frame (3) being each made at least in part of a good conductor metal material, these parts being arranged either to ensure electrical continuity between them, or so that the space between them is less than 5 mm, at least when the screen covers the frame, the biological protection device being configured to hold the mobile phone (2) so that the screen (4) is located opposite the ergonomic interface (21) of the mobile phone (2) and maintaining, from all sides, an electrically insulating space between the metal part of the protection element (1) and the mobile phone (2).

2. Device according to Claim 1, **characterized in that** the electrically insulating space between the metal part of the protective element (1) and the ergonomic interface of the mobile telephone (2) is at least 2 mm thick, preferably between 3 mm and 8 mm.

3. Device according to claim 1, **characterized in that** the portion of good conducting metal material of the screen (4) consists of a continuous or discontinuous metallization of the outer surface of the screen, the part of good conducting metal material of the frame (3) consists of a continuous or discontinuous metallization of the outer surface of the frame.

4. Device according to Claim 1, **characterized in that** the device is configured in such a way that the electrically insulating space satisfies relative dimensioning criteria, these relative dimensioning criteria corresponding to a length of the protection element equal to or greater 1.15 times the length of the mobile phone, a width of the protection element equal to or greater than 1.2 times the width of the mobile phone, and a depth of the protection element equal to or greater than 1.3 times the thickness of the mobile phone.

5. Device according to Claim 1, **characterized in that** the device is configured in such a way that the electrically insulating space satisfies relative dimensioning criteria, these relative dimensioning criteria corresponding in addition to a length of the protection element of the device, preferably less than or equal to 1.3 times the length of the mobile phone, a width of the protective element preferably less than or equal to 1.3 times the width of the mobile phone and a depth of the protective element preferably lower or equal to 1.6 times the thickness of the mobile phone.

6. Device according to claim 1, **characterized in that** the outer surface of the screen (4) is slightly curved so as to obtain a concavity of the protection element (1).

7. Device according to claim 1, **characterized in that** the screen (4) and / or the frame (3) comprise one or more orifices (43) smaller than the wavelengths of the electromagnetic waves used in mobile telephony, the port (s) (43) being configured so as to be located opposite the microphone and / or the loudspeaker and / or any other device included in the mobile telephone (2) and responsible for receiving and / or emitting acoustic waves, so that these acoustic waves are not altered by the protection element (1), or configured to be located opposite the connectors of the mobile phone.

8. Device according to claim 1, **characterized in that** it comprises a fastening member (5 or 6) of non-conductive insulating material configured to be fixed on at least a part of the periphery of the frame (3) while pressing on the back of the mobile phone (2) and **in that** it comprises a non-conductive insulating material adhered to at least a portion of the inner periphery of the frame (3), configured to hold the mobile phone (2) sandwiched between the fixing member (5) and the insulating material, and to maintain the space of at least 2 mm between the metal part of the protective element (1) and the ergonomic interface of the mobile phone (2).

9. Device according to claim 8, **characterized in that** the fastening member (6) consists of two closing bars (61, 62) mounted on the protective frame opposite the protective shield, at least one (62) of the two bars being articulated around the frame between at least one open position and one closed position.

10. Device according to claim 1, **characterized in that** a housing (44) for receiving a magnet (441) is formed in the periphery of the inner surface of the screen (4), said magnet (441) being arranged to attract a magnet (311) housed in a housing (31) formed in the outer periphery of the frame (3) vis-à-vis the housing (44) formed in the periphery of the inner surface of the screen (4), when the screen is in the covering position of the frame, to maintain the screen in the frame covering position.

11. Device according to claim 1, **characterized in that** the pivot connection is arranged in a projection (45) forming the corner of the screen (4) by which the screen (4) is connected to the frame (3) and in a protrusion (32) forming the corner of the frame (3) by which the frame is connected to the screen, the projections (45, 32) of the screen (4) and the frame (3) cooperating with each other, the axis (41) of the pivot connection being fixed on the inner surface of the screen (4) and in the center of the protrusion (45) of the screen to fit in a through bore (33) made in the center of the projection (32).) of the frame (3).

12. Device according to claim 11, **characterized in that** the axis (41) of the pivot connection is of a determined length to pass through, and protrude at one end, the through bore (33) formed in the projection (32) of the frame (3), the end of the overhanging pin (41) being engaged with an axle stop (6) to prevent the pin (41) from leaving the bore (33) therethrough, the inner surface of the screen (4) rubbing by pivoting against a portion of the outer surface of the frame (3).

13. Device according to claim 11, **characterized in that** the projection (45) of the screen (4) has a lug (46) fixed beside the axis (41) of the pivot connection and eccentrically relative to that here, the lug (46) cooperating with a withdrawal of material (34) formed in the projection (32) of the frame (3) in the path of rotation of the lug (46) driven by the pivoting of the screen (4), the cooperation of the lug (46) with the removal of material (34) limiting the pivoting of the screen (4) relative to the frame (3) at least between the position of recovery of the frame by the screen and the position of non-recovery of the frame by the screen.

14. Device according to claim 11, **characterized in that** the projection (45) of the screen (4) has a housing (47) fixed beside the axis (41) of the pivot connection and eccentrically relative to that the housing (47) being intended to receive a magnet (471), and the projection (32) of the frame (3) comprises at least one bore (35) intended to receive a magnet (351), the housing (47) and each bore being arranged so that the magnet (471) housed in the screen (4) passes opposite the magnet housed in each bore of the frame (3) in the pivoting path of the screen relative to the frame.

15. Device according to claim 14, **characterized in that** the magnet (471) housed in the projection (45) of the screen (4) is arranged to attract a first magnet (351) housed in a first bore (35) of the protruding (32) from the frame (3), and holding the screen in the covering position of the frame, and to attract a second magnet (361) housed in a second bore (36) of the projection (32) of the frame (3), and keep the screen in the non-recovery position of the frame.

16. Device according to claim 15, **characterized in that** a third magnet (371) housed in a third bore (37) of the projection (32) of the frame between the first and second bores (35, 36) is arranged to repel the magnet (471) housed in the projection (45) of the screen (4), to push back the screen in an intermediate position between the overlap position and the non-overlap position towards the one or the other of these positions.
